# EUROPEAN PATENT SPECIFICATION

(11) **EP 3 944 437 B1**
(45) Date of publication and mention of the grant of the patent: **06.08.2025**
(21) Application number: 21197199.9
(22) Date of filing: 05.04.2018
(51) Int. Cl.: H02G 3/04

(54) **HYGIENIC CABLE LADDER ASSEMBLY**
HYGIENISCHE KABELLEITERANORDNUNG
ENSEMBLE ÉCHELLE À CÂBLE HYGIÉNIQUE

(30) Priority: 05.04.2017 BE 201705240
(43) Date of publication of application: 26.01.2022
(62) Divisional of application: 18165868.3
(73) Proprietor: Vecotec BV, 8840 Staden (BE)
(72) Inventor: VERPLANCKE, Bob, 8840 Staden (BE)
(74) Representative: Chielens, Kristof

(56) References cited:
- FR-A1- 2 517 799
- FR-A1- 2 673 335
- US-A- 3 226 468
- US-A1- 2002 145 084
- US-A1- 2003 178 535
- RAIMONDI R L: "FLAT RIBBON CABLE RETENTION", IBM TECHNICAL DISCLOSURE BULLETIN,, vol. 17, no. 11, 1 April 1975 (1975-04-01), pages 3375 - 3376, XP001457054

## Description

The present invention relates to a cable assembly, comprising a number of cable holders for hygienically supporting and securing cables and lines (e.g. for compressed air or water) on walls or machines without the use of additional securing means, such as cable ties and brackets.

The cable holder was developed for use in the food industry. In the foods industry, cables have to be secured as hygienically as possible. This means that both the cable holder and the cables provided therein have to be easy to clean.

Perishable product remains (small pieces of meat, vegetables, dairy products, etc.) which come into contact with the securing system for one reason or another, should not remain in the system. After a short period of time, these product remains will (defrost and) perish, resulting in a significant increase in the growth of bacteria. These undesired bacteria may then end up back in the food, which is detrimental to the food safety. It is therefore important that the securing system can be cleaned to the greatest extent possible, so that the perishable remains can be removed.

The current way of securing cables, lines and the like by means of pipes, tubes, etc. is a risk, because bacteria may grow in these profiles. As the inside of the pipes, tubes, etc. is difficult to access, it is also not possible to clean them to a sufficient degree, resulting in the growth of bacteria.

So as to be able to do this in a hygienic manner, it is also possible to use closed pipes with cable glands on the ends, but this has the drawback that drawstrings are required in order to be able to accommodate several cables in the pipe. However, this way of working is also time-consuming. In addition, it is virtually impossible to fit additional cables later on without dismantling the closed pipes.

Most often, an open system, in which the cables and/or lines are freely accessible, is used. Such open systems use so-called cable nets or wire ducts, to which the cables and/or lines are secured by means of additional securing means, such as cable ties.

Cable nets or wire ducts are made from longitudinal and transverse wires which have been welded together and have the drawback that vegetables can easily remain behind, become hooked or stuck at the welded joint. These perishable products may then start to rot, which may result in the growth of bacteria.

The use of additional securing means, such as cable ties, with a classical wire duct also has its drawbacks. At the point where the cables are tied together by means of a cable tie, dirt may accumulate between the cables and the cable tie, resulting in the growth of bacteria.

The cable ties themselves also create additional problems when they become detached, because, since they are made of plastic and the foodstuffs are often also packaged in a plastic enclosure, it is difficult to detect them and remove them from the product stream. It will be clear that when a person eats vegetables containing a piece of plastic, this may have detrimental consequences. In addition, fitting cable ties is also time-consuming.

The existing cable nets are also always constructed in such a way that one or more uninterrupted round wires are situated on the rear side of the nets. Between these wires and the surface to which these are fastened, product remains may also still accumulate, thus resulting in the growth of bacteria.

If pressurized water is used to clean after a production run in the food industry, the bacteria are spread around. This bears the risk of the bacteria being spread throughout the factory and contaminating the open product or the machines. In the latest recommendations on cleaning of production lines in the food industry, the use of water is discouraged and instead the advice is given to use wipes sprinkled with an alcoholic agent (disinfection) to clean the machines, cable guides, etc. regularly. To this end, it has to be possible to untie the cables in a simple manner, since, once they have been untied, it is possible to use the wipe on all sides of the cables and thus to clean them efficiently. Then, it has to be possible to secure them in the system again, so that they no longer hang loosely and are not able to rotate along with rotating components of the machines.

French patent FR 2 673 335 describes a flexible cable holder, comprising an elastic element which has to be deformed in order to make it possible for cables to be introduced and held securely. However, such a cable holder has the drawback that it will start to sag after some time, due to the weight of the cables. In addition, such a cable holder can only be secured on a surface with difficulty. RAIMONDI R. L: "FLAT RIBBON CABLE RETENTION", IBM TECHNICAL DISCLOSURE BULLETIN, vol 17, no 11, 1 April 1975 (1975-04-01), pages 3375-3376, XP001457054, discloses a cable holder wherein a single wire is folded multiple times in order to create multiple points of support for a flat cable; US2002/145084A1 refers to a cable tray having an elongated central spine with support arms radiating laterally from the spine; other relevant documents are US3226468A and FR2517799A1.

US 2003/178535 A1 describes a cable tray apparatus for use with a ladder-type cable tray having a pair of parallel spaced apart rails interconnected by a plurality of rungs. The cable tray apparatus includes an elongate flexible spine member selectively bendable into a number of different configurations, and a plurality of spaced apart hangers attached to the elongate spine member along the length thereof, each of the plurality of hangers defining a partially enclosed area configured and dimensioned to receive at least one cable therein.

It is therefore an object of the present invention to develop a cable assembly which can easily be produced and which allows a cable and/or line to be secured in a simple and quick way and which, in addition, is easy to clean.

The object of the invention is achieved by providing a cable assembly for hygienically securing cables and/or lines, according to claim 1. The wire profile has a diameter of between 2 and 15 mm, preferably of between 3 and 12 mm. Due to the use of a rigid wire profile, the support part and screening parts remain in a fixed position with respect to each other and this before, during and after the fitting of a cable and/or line. In each zone, the support and screening parts will form a holding space, as it were, for the cables and/or lines.

The wire profile is bent into a shape, in which case a repeating pattern (zones) is created with an (access) opening on one side or corner between which the cables and/or lines can be placed (woven). When viewing the secured cables along the length direction, it can be seen that these are surrounded by the profile. In a transverse direction of the profile, the opening can be seen. Due to the rigidity of the secured cables, they are automatically locked between the profile in the extended state. In each zone, the access opening is between two screening parts and this opening provides access to the holding spaces, in particular the support part. Consequently, the support part is delimited at both its ends by a screening part. In the first place, the screening parts will prevent the unintentional loss of the cable and/or line from the cable holder, but, depending on the location of the cables and/or lines or the position of the cable holder, they will also, in some cases, serve as a support for these cables and/or lines. Placing cables and/or lines in such a cable holder also has the advantage that these cables and/or lines can easily be set free, e.g. during cleaning, and, if necessary, be removed from the cable holder.

As the wire profile is an uninterrupted round wire, it is an open structure and thus easy to clean. As it is an uninterrupted round wire, there are no cross-connections of wires, so that no residual material can become trapped. The use of a wire having a circular cross section also has the advantage that there are no flat surfaces and that water or another liquid will readily run off, so that no stagnant water remains behind on the cable holder which could stimulate the growth of bacteria.

Due to the repeating pattern (zones) which create an opening on one side, it is possible to weave the cables and due to the rigidity of the cables, these are automatically locked. As a result thereof, no additional connecting means are necessary and the cables are loosely locked in the profile.

By applying a slight force in the transverse direction of a locked cable, it is also possible to remove it from the cable holder through the opening and this without deforming the holder. As a result thereof, these can be cleaned regularly using a disinfecting wipe.

Since the cables and/or lines in this system are surrounded (enclosed) by the profile, but still hang loosely, the cables can move separately from one another and can readily be cleaned.

Since no additional securing means (cable ties) are required, fitting this system also saves time and this results in an economic advantage.

According to the invention, invention, a round wire profile will be used as the base material. This wire will be formed in the repeating pattern. The repeat distance of the pattern is between 50 and 500 mm. The passage on the inner side of the profile may vary in accordance with the number of cables that have to be secured. The opening via which the cables can be woven into the profile varies between 5 and 50 mm.

Various embodiments of the invention are possible. These may differ in accordance with the form of the repeating pattern. It is typical of the repeating pattern that several (access) openings are created. Via these openings, the cables can be introduced (woven) into the cable holder. Depending on the pattern, this opening may in each case be situated on the same side or may be on alternate sides.

Various embodiments of the cable holder according to the invention are possible. The form of the enclosure of the cables to be secured may vary. In the figures, viewing along the length direction of the cables to be secured, there is always a polygonal holding space which encloses the cables, preferably the space has an odd number of corners.

Various embodiments of the invention are possible. The cross section of the wire profile is made from a round wire.

Various embodiments of the invention are possible. Regarding material of the wire profile, there are various options, such as steel, stainless steel, galvanized steel, aluminium, plastic, etc.

The invention is mainly intended for use in the food industry, but may also be used in various other environments where cables or lines have to be secured. Various embodiments of the invention are possible.

Preferred embodiments of the cable assembly according to the invention are described still further in the dependent claims.

The cable assembly for hygienically securing cables and/or lines according to the invention, comprises a number of cable holders, in which the said assembly comprises two securing profiles extending parallel to each other, in which the cable holders are placed next to each other in a direction at right angles to the length direction of the securing profiles and are secured on the said securing profiles, and in which, in use, the cables and/or lines extend along the length direction of the securing profiles. The securing profiles, in an embodiment not covered by claims, are preferably hollow rectangular profiles. The various cable holders are placed a distance apart. The juxtaposed cable holders extend parallel to each other. In the cable assembly according to the invention, the said cable holders are made from a one-piece rigid wire profile which comprises a number of recurring zones, in which the wire profile is folded several times, so that a holding space for a cable and/or line is formed at the location of each zone.

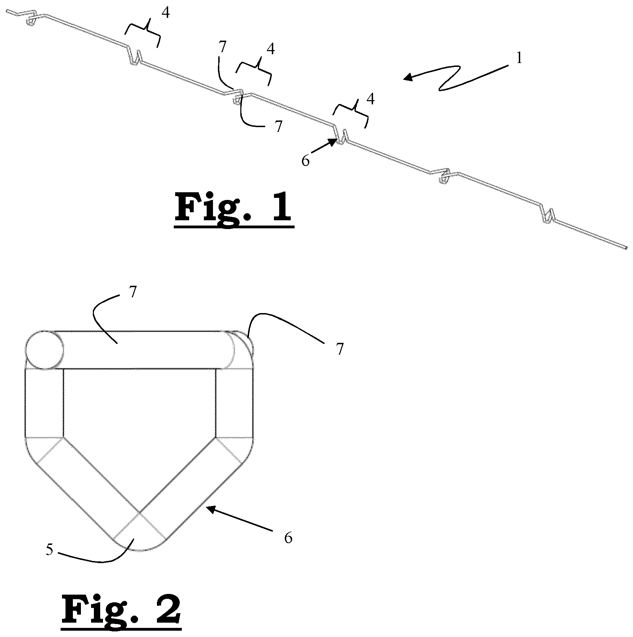

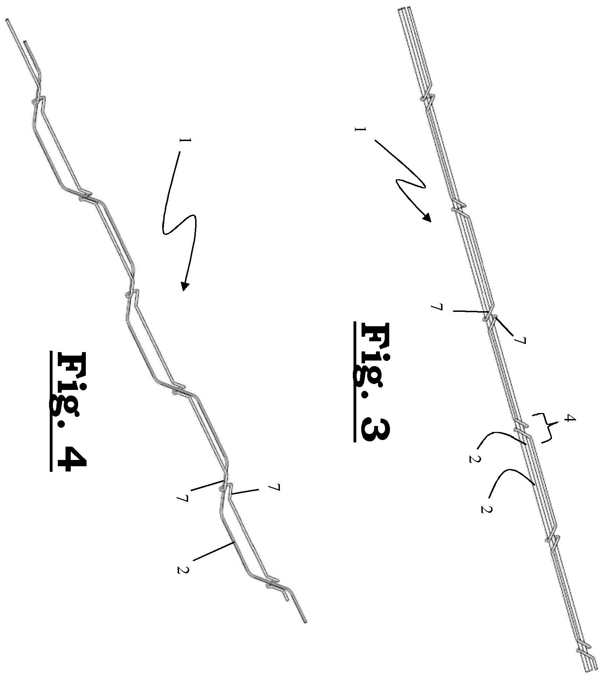

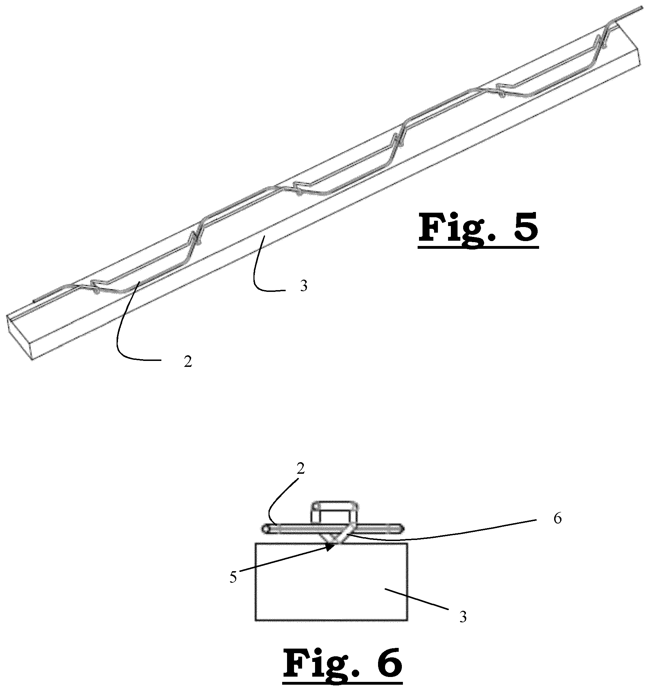

In order to further illustrate the features of the present invention and to indicate additional advantages and particulars, a more detailed description of the cable assembly according to the invention will now be given. It will be clear that nothing in the following description may be interpreted as a limitation of the protection of the invention defined in the claims. The configurations described in Fig. 1 - 7, and 11 are not part of the invention as claimed.

In this description, reference numerals and letters are used to refer to the attached drawings, in which:
- ***Fig. 1*** *shows a perspective view of a cable holder;*
- ***Fig. 2*** *shows a cross section of a recurring zone in which the support part and the adjacent screening parts are visible;*
- ***Fig. 3*** *shows a view of the cable holder illustrated in* *Fig. 1* *in which two cables are arranged;*
- ***Fig. 4*** *shows a view of a cable holder which shows how a cable is placed;*
- ***Fig. 5*** *shows an image of a cable holder which is provided on a securing plate via the pointed securing parts;*
- ***Fig. 6*** *shows a detail view of the securing arrangement of the cable holder on a securing surface;*
- ***Fig. 7*** *shows a view of a cable holder in which two extended cables are placed, as a result of which they are locked in the holder, and in which the holder is provided on a securing plate;*
- ***Fig. 8*** *shows a perspective view of a cable assembly according to the invention;*
- ***Fig. 9*** *shows a view of the cable assembly illustrated in* *Fig. 8* *and provided with cables;*
- ***Fig. 10*** *shows a detail view of a part of a cable assembly according to the invention;*
- ***Fig. 11*** *shows a view of a model in which the pattern is made from sheet material instead of wire material.*

First of all, the present description describes a cable holder (1) for hygienically securing cables (2) and/or lines. Such a cable holder (1) is illustrated in Figs. 1 to 7. The cable holder (1) is made from a one-piece rigid wire profile which extends in the length direction and comprises a number of recurring zones (4) in which the wire profile is folded a number of times, so that a support part (6) for a cable (2) and/or line and screening parts (7) are formed at the location of each zone. With such a cable holder (1), a cable (2) and/or line may be placed bearing against the support part (6) by means of flexible bending of the cable (2) along the screening parts (7). In this case, the screening parts (7) prevent unintentional loss of the cable (2) and/or line from the cable holder (1). With such a cable holder (1), the cables (2) and/or lines extend along the length direction of the cable holder (1).

This cable holder (1) was developed to secure cables (2) in a hygienic way. Due to its specific design, in particular the design of the support part (6) in particular the pointed securing part (5), the cable holder (1) is securable in a practical manner on a securing surface (3).

The cable holder (1) is made from an uninterrupted bent wire profile. By bending it to a specific shape, a repeating pattern of successive zones (4) is produced. This pattern creates an opening in the profile, as a result of which a cable and/or line can be woven in the cable holder (1), as it were. When the cable in the holder (1) is then pulled straight, the cable, partly because of its rigidity, is enclosed by the profile and is thus locked. In the absence of external forces, it will thus always remain on the inside of the profile.

Fig. 2 shows a cross section which clearly shows how the wire profile is bent in each zone (4). It also clearly shows that the support part (6) comprises a pointed securing part (5) by means of which the cable holder is securable on a securing surface. The securing part (5) is formed by making a V-shaped bend (fold). Due to this fold (5) in the wire profile, a distance is created between the cables (2) and the securing surface (3). This distance benefits the cleanability of the profile.

Securing the cable holder on a securing surface is preferably achieved by means of a welded joint, but if welding is not possible, other (alternative) securing methods, for example using securing hooklets, may be used.

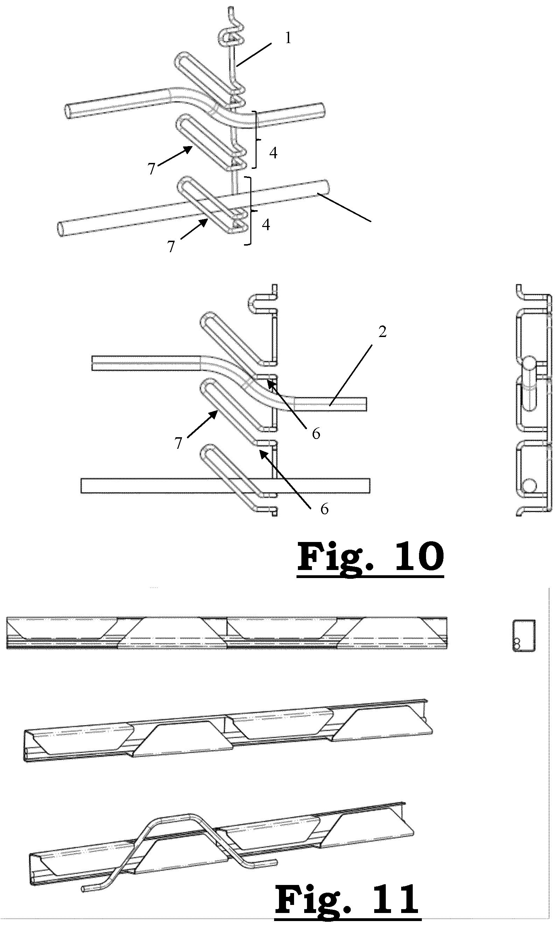

Fig. 11 shows a number of embodiments in which the cable holder is made from sheet material instead of wire material. This sheet material may be metal, but may also be plastic.

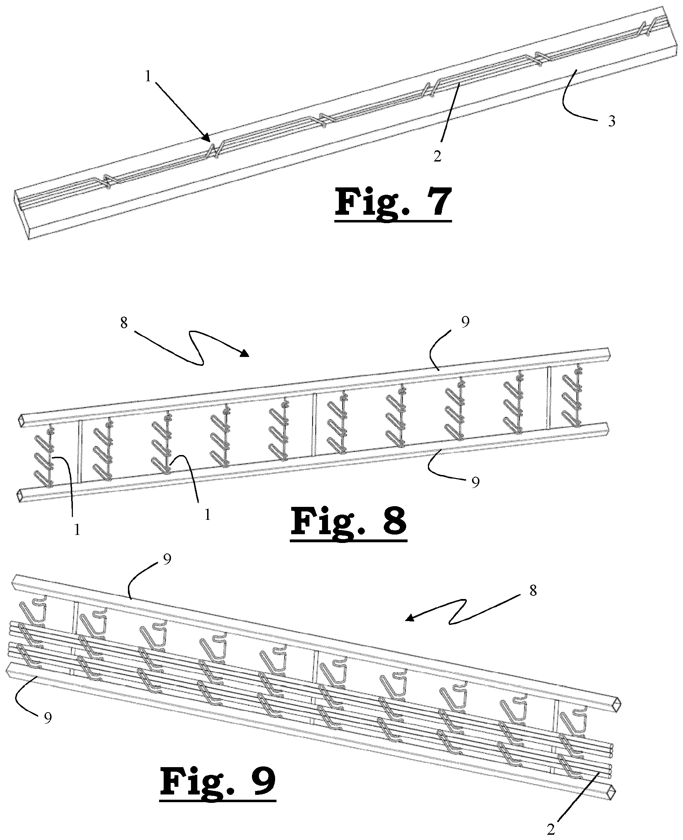

The present invention relates to a cable assembly (8) for hygienically securing cables (2) and/or lines, comprising a number of cable holders (1). Such an assembly is presented in Figs. 8 to 10. The said assembly (8) has at least two parallel securing profiles (9). These securing profiles (9) are hollow rectangular profiles made of metal. Obviously, the securing profiles may be designed differently, such as for example round solid bars, round hollow tubular elements, etc. When securing the assembly on a securing surface, it is preferred if the securing profiles (9) are placed diagonally, so that the surfaces of the securing profiles are arranged at a downward angle. As a result thereof, there are no flat surfaces and liquids and/or any product remains can easily run off.

Between the securing profiles (9), cable holders (1) are placed in a direction at right angles to the length direction of the securing profiles (9). The cable holders (1) are placed a distance apart, preferably parallel to each other. At their ends, they are secured on the said securing profiles (9), preferably via a welded joint. In use, the cables (2) and/or lines extend along the length direction of the securing profiles (9), as is evident from Fig. 9, inter alia.

The cable holders (1) are made from a one-piece rigid wire profile which comprises a number of recurring and successive zones (4) (see, inter alia, Fig. 10) in which the wire profile is folded a number of times, so that a holding space for a cable (2) and/or line is formed at the location of each zone.

In each zone (4), a support part (6) for a cable (2) and/or line and a screening part (7) are formed by folding or bending the wire profile. Due to the fact that the zones (4) succeed each other, an access opening is formed between the screening part of the one zone and the screening part of the next zone, via which a cable (2) and/or line can be placed in the holding space. In use, the cable and/or line may bear at least partly against the support part (6) and/or at least partly against the screening part (7). In use, the screening parts (7) are preferably arranged upright and will thus prevent unintentional loss of the cable (2) and/or line from the cable holder (1).

## Claims

1. Cable assembly (8) for hygienically securing cables (2) and/or lines, comprising a number of cable holders (1), wherein the said assembly (8) comprises two securing profiles (9) extending parallel to each other, in which the cable holders are placed at a distance apart next to each other in a direction at right angles to the length direction of the securing profiles (9) so that the juxtaposed cable holders extend parallel to each other and wherein said cable holders are secured with their ends on the said securing profiles, and in which, in use, the cables (2) and/or lines extend along the length direction of the securing profiles (9), **characterized in that** the said cable holders (1) are made from a one-piece uninterrupted round rigid wire profile which each comprises a plurality of recurring and successive zones (4), wherein in each zone (4) a support part (6) for a cable (2) and/or line and a screening part (7) are formed by folding or bending the wire profile, so that a holding space for a cable (2) and/or line extending along the length direction of the securing profiles (9), is formed at the location of each zone, wherein, the screening parts (7) and the support parts (6) remain in a fixed position with respect to each other before, during and after the fitting of a cable (2) and/or line.

2. Cable assembly (8) according to Claim 1, **characterized in that** an access opening is formed between the screening part of the one zone and the screening part of the next zone, via which a cable (2) and/or line can be placed in the holding space.

3. Cable assembly (8) according to Claim 1 or 2, **characterized in that** in use, the screening parts (7) are arranged upright to prevent unintentional loss of the cable (2) and/or line from the cable holder (1).

4. Cable assembly (8) according to any one of the claims 1 to 3, **characterized in that** the wire profile has a diameter of between 2 and 15 mm.

5. Cable assembly (8) according to any one of the preceding claims, **characterized in that** the distance between the recurring zones is between 50 and 200 mm.

6. Cable assembly (8) according to one of the preceding claims, **characterized in that** the cable holder (1) is made of steel, stainless steel, galvanized steel or plastic.

7. Cable assembly (8) according to one of the preceding claims, **characterized in that** the cross section of the cable holder (1) is between 100 and 5000 mm².

8. Cable assembly (8) according to one of the preceding claims, **characterized in that** said assembly is a cable ladder assembly.

## Patentansprüche

1. Kabelbaugruppe (8) zum hygienischen Befestigen von Kabeln (2) und/oder Leitungen, umfassend eine Anzahl von Kabelhaltern (1), wobei die Baugruppe (8) zwei sich parallel zueinander erstreckende Befestigungsprofile (9) umfasst, wobei die Kabelhalter in einer rechtwinklig zu der Längsrichtung der Befestigungsprofile (9) verlaufenden Richtung in einem Abstand nebeneinander angeordnet sind, so dass sich die nebeneinander angeordneten Kabelhalter parallel zueinander erstrecken, und wobei die Kabelhalter mit ihren Enden an den Befestigungsprofilen befestigt sind und wobei sich die Kabel (2) und/oder Leitungen im Gebrauch entlang der Längsrichtung der Befestigungsprofile (9) erstrecken, **dadurch gekennzeichnet, dass** die Kabelhalter (1) aus einem einstückigen, ununterbrochenen runden starren Drahtprofil hergestellt sind, das jeweils eine Vielzahl von sich wiederholenden und aufeinanderfolgenden Zonen (4) aufweist, wobei in jeder Zone (4) ein Stützteil (6) für ein Kabel (2) und/oder eine Leitung und ein Abschirmteil (7) durch Falten oder Biegen des Drahtprofils gebildet sind, so dass ein sich entlang der Längsrichtung der Befestigungsprofile (9) erstreckender Halteraum für ein Kabel (2) und/oder eine Leitung an dem Ort jeder Zone gebildet wird, wobei die Abschirmteile (7) und die Stützteile (6) vor, während und nach dem Anbringen eines Kabels (2) und/oder einer Leitung in einer bezüglich einander festen Position bleiben.

2. Kabelanordnung (8) nach Anspruch 1, **dadurch gekennzeichnet, dass** zwischen dem Abschirmteil der einen Zone und dem Abschirmteil der nächsten Zone eine Zugangsöffnung ausgebildet ist, über die ein Kabel (2) und/oder eine Leitung in den Aufnahmeraum einlegbar ist.

3. Kabelbaugruppe (8) nach Anspruch 1 oder 2, **dadurch gekennzeichnet, dass** die Abschirmteile (7) im Gebrauch aufrecht angeordnet sind, um ein unbeabsichtigtes Verlieren des Kabels (2) und/oder der Leitung aus dem Kabelhalter (1) zu verhindern.

4. Kabelbaugruppe (8) nach einem der Ansprüche 1 bis 3, **dadurch gekennzeichnet, dass** das Drahtprofil einen Durchmesser zwischen 2 und 15 mm aufweist.

5. Kabelbaugruppe (8) nach einem der vorhergehenden Ansprüche, **dadurch gekennzeichnet, dass** der Abstand zwischen den sich wiederholenden Zonen zwischen 50 und 200 mm beträgt.

6. Kabelbaugruppe (8) nach einem der vorhergehenden Ansprüche, **dadurch gekennzeichnet, dass** der Kabelhalter (1) aus Stahl, Edelstahl, verzinktem Stahl oder Kunststoff hergestellt ist.

7. Kabelbaugruppe (8) nach einem der vorhergehenden Ansprüche, **dadurch gekennzeichnet, dass** der Querschnitt des Kabelhalters (1) zwischen 100 und 5000 mm² beträgt.

8. Kabelbaugruppe (8) nach einem der vorhergehenden Ansprüche, **dadurch gekennzeichnet, dass** die Baugruppe eine Kabelgestellbaugruppe ist.

## Revendications

1. Ensemble à câble (8) destiné à fixer de manière hygiénique des câbles (2) et/ou des conduits, comprenant un certain nombre de porte-câbles (1), ledit ensemble (8) comprenant deux profilés de fixation (9) s'étendant parallèlement l'un à l'autre, les porte-câbles étant placés à une certaine distance les uns des autres dans une direction perpendiculaire à la direction de la longueur des profils de fixation (9) de sorte que les porte-câbles juxtaposés s'étendent parallèlement les uns aux autres et lesdits porte-câbles étant fixés avec leurs extrémités sur lesdits profilés de fixation, et, lors de l'utilisation, les câbles (2) et/ou les conduits s'étendant longitudinalement dans la direction de la longueur des profilés de fixation (9), **caractérisé en ce que** lesdits porte-câbles (1) sont fabriqués à partir d'un profilé de fil rigide rond ininterrompu d'une seule pièce qui comprend une pluralité de zones récurrentes et successives (4), dans chaque zone (4) une partie support (6) pour un câble (2) et/ou un conduit et une partie écran (7) étant formées en pliant ou en courbant le profilé de fil, de sorte qu'un espace de maintien pour un câble (2) et/ou un conduit s'étendant longitudinalement dans la direction de la longueur des profilés de fixation (9), soit formé à l'emplacement de chaque zone, les parties écran (7) et les parties support (6) restant dans une position fixe l'une par rapport à l'autre avant, pendant et après le placement d'un câble (2) et/ou d'un conduit.

2. Ensemble à câble (8) selon la revendication 1, **caractérisé en ce qu'**une ouverture d'accès est formée entre la partie écran d'une zone et la partie écran de la zone suivante, par laquelle un câble (2) et/ou un conduit peut être placé dans l'espace de retenue.

3. Ensemble à câble (8) selon la revendication 1 ou 2, **caractérisé en ce que** lors de l'utilisation, les pièces écran (7) sont disposées verticalement pour empêcher la perte involontaire du câble (2) et/ou du conduit par le porte-câble (1).

4. Ensemble à câble (8) selon l'une quelconque des revendications 1 à 3, **caractérisé en ce que** le profilé de fil a un diamètre compris entre 2 et 15 mm.

5. Ensemble à câble (8) selon l'une quelconque des revendications précédentes, **caractérisé en ce que** la distance entre les zones récurrentes est comprise entre 50 et 200 mm.

6. Ensemble à câble (8) selon l'une quelconque des revendications précédentes, **caractérisé en ce que** le porte-câble (1) est en acier, en acier inoxydable, en acier galvanisé ou en plastique.

7. Ensemble à câble (8) selon l'une des revendications précédentes, **caractérisé en ce que** la section transversale du porte-câble (1) est comprise entre 100 et 5 000 mm².

8. Ensemble à câble (8) selon l'une des revendications précédentes, **caractérisé en ce que** ledit ensemble est un ensemble échelle à câble.
